# EUROPÄISCHE PATENTSCHRIFT

(11) **EP 1 976 739 B1**
(45) Veröffentlichungstag und Bekanntmachung des Hinweises auf die Patenterteilung: **09.11.2011**
(21) Anmeldenummer: 06829750.6
(22) Anmeldetag: 20.12.2006
(51) Int. Cl.: B60T 10/00, B60T 7/08

(54) **ANTRIEBSSTRANG EINES KRAFTFAHRZEUGES**
DRIVE TRAIN OF A MOTOR VEHICLE
CHAINE CINEMATIQUE POUR VEHICULE AUTOMOBILE

(30) Priorität: 28.01.2006 DE 102006004080
(43) Veröffentlichungstag der Anmeldung: 08.10.2008
(73) Patentinhaber: ZF Friedrichshafen AG, 88038 Friedrichshafen (DE)
(72) Erfinder: GRIESMEIER, Uwe, 88677 Markdorf (DE); REITZ, Peter, 88099 Neukirch (DE)
(86) Internationale Anmeldenummer: PCT/EP2006/012268
(87) Internationale Veröffentlichungsnummer: WO 2007/085294

(56) Entgegenhaltungen:
- DE-A1- 4 420 116
- DE-A1- 10 221 701
- DE-A1- 10 257 257
- DE-A1- 19 537 273

## Beschreibung

Die Erfindung betrifft einen Antriebsstrang eines Kraftfahrzeuges gemäß dem Oberbegriff des Patentanspruchs 1.

Aus der Praxis sind seit geraumer Zeit Fahrzeuge bekannt, weiche zwecks Reduktion des Kraftstoffverbrauchs mit einer Freilauffunktion ausgestattet sind. Diese funktioniert derart, dass zum Beispiel beim durch den Fahrer verursachten Gaswegnehmen die antreibende Brennkraftmaschine von den angetriebenen Fahrzeugrädern durch Öffnen einer Kupplung im Antriebsstrang getrennt wird. Die Drehzahl der Brennkraftmaschine kann dann Kraftstoff sparend zur Leerlaufdrehzahl zurückgeführt werden. Zur noch stärkeren Verbrauchsreduktion ist es zudem bekannt, in solchen antriebslosen Schubbetriebsphasen des Kraftfahrzeuges die Kraftstoffzufuhr zur Brennkraftmaschine komplett abzuschalten, wobei in diesem Fall jedoch ein erhöhter Aufwand zum Betreiben von Nebenaggregaten erforderlich wird. Bei beiden Betriebsweisen entfällt jedoch die bremsende Wirkung der Brennkraftmaschine im Schubbetrieb des Fahrzeugs.

Für den Fachmann ist nachvollziehbar, dass entsprechend den genannten Betriebsverfahren für die Brennkraftmaschine bei Bergabfahrten eine stetige Zunahme der Geschwindigkeit des Kraftfahrzeugs zu verzeichnen ist, welche ohne Motorbremswirkung nur durch die Betätigung einer Betriebsbremse oder einer Zusatzbremse (Retarder) verringert werden kann. Bei Personenkraftfahrzeugen steht üblicherweise nur eine radseitige Betriebsbremse zur Verfügung, so dass bei diesen bei steilen Bergabfahrten antriebslosen Schubbetriebsphasen üblicherweise vermieden werden.

Ferner ist mit dem Lastkraftwagen der Marke Volvo^{®} vom Typ FH 12 ein Antriebsstrang bekannt, mit einem als Brennkraftmaschine ausgebildeten Antriebsmotor, mit einem als automatisches Splittergetriebe mit 12 Vorwärtsgängen ausgebildeten Drehmomentwandler, mit einer manuell zu betätigenden Stellvorrichtung in Form eines Gaspedals für ein Leistungsstellglied (beispielsweise eine Kraftstoffeinspritzpumpe) des Antriebsmotors, und mit einem manuell zu betätigenden Vorwählglied in Form eines neben dem Fahrersitz angeordneten Getriebegangbereichwählhebels, sowie mit einem manuell zu betätigenden Steller in Form eines Bremspedals zur Betätigung einer die Fahrgeschwindigkeit des Fahrzeugs verzögernden Betriebsbremse.

Eine diesen Antriebsstrang zugeordnete elektronische Steuereinheit detektiert unter anderem einen Zustand, in welchem keine Antriebsleistung erforderlich oder eine Motorbremse nicht eingeschaltet ist, ob eine automatische Geschwindigkeitsregelanlage eingeschaltet ist, ob sich das Getriebe im Automatikmodus befindet und ob einer der Vorwärtsgänge 7 bis 12 eingelegt ist. Treffen alle, diese Bedingungen gemeinsam zu, so wird das Splittergetriebe automatisch in den Neutralmodus geschaltet, so dass dann die drehmomentübertragende Wirkung zwischen der Brennkraftmaschine und den angetriebenen Rädern aufgehoben ist.

Um dem einleitend genannten Problem bei Bergabfahrten zu begegnen, wird diese bekannte Freilauffunktion sofort dann durch erneutes Schließen des Drehmomentflusses im Antriebsstrang unterbunden, wenn entweder das Bremspedal oder das Gaspedal betätigt werden, oder wenn die Motorbremse eingeschaltet wird.

Des Weiteren wird mit der unveröffentlichten Patentanmeldung DE 10 2005 003 608.2 ein Verfahren zum Betreiben des Antriebsstranges eines Fahrzeuges vorgeschlagen, enthaltend einen Antriebsmotor, beispielsweise eine Brennkraftmaschine, und einen Drehmomentwandler, beispielsweise ausgebildet als automatisches Getriebe oder als automatisiertes Schaltgetriebe, mit einer manuell zu betätigenden Stellvorrichtung für ein Leistungsstellglied des Antriebsmotors, mit einem manuell zu betätigenden Vorwählglied für einen Betriebsbereich des Drehmomentwandlers bzw. Getriebes, mit einem manuell zu betätigenden Steller zur Betätigung einer die Fahrgeschwindigkeit des Fahrzeugs verzögernden Bremse, und mit einer elektronischen Steuereinheit zur Aufnahme, Verarbeitung und Abgabe von Signalen sowie Daten des Antriebsstranges und/oder Fahrzeugs. Weiter ist diesem Antriebsstrang eine Freilaufeinrichtung mit einer Freilauffunktion zugeordnet.

Um durch das Betätigen der Stellvorrichtung für das Leistungsstellglied bzw. das Betätigen des auf die Bremse wirkenden Stellers schnell und flexibel zwischen den Zuständen "freigegebener Freilaufeffekt" bzw. "gesperrter Freilaufeffekt" umschalten zu können, ist dem Antriebsstrang die genannte Freilaufeinrichtung derart zugeordnet, dass
a) im Schubbetrieb bei nicht betätigter Stellvorrichtung des Leistungsstellgliedes zunächst die Freilauffunktion freigegeben wird und
b) dann, wenn anschließend der Steller zur Verringerung der Fahrgeschwindigkeit betätigt wird, die Freilauffunktion gesperrt wird und
c) dann, wenn die Freilauffunktion im Schubbetrieb wieder freigegeben werden soll, dieses durch Betätigen der Stellvorrichtung des Leistungsstellgliedes erfolgt.

Fernerhin sind aus der Praxis Zusatzbremsen, insbesondere sogenannte hydrodynamische oder elektrodynamische Retarder, bekannt, die überwiegend in Nutzfahrzeugen Verwendung finden und der Entlastung der radseitigen Betriebsbremse dienen, indem dieselben neben der herkömmlichen Motorbremse weitere Bremswirkung infolge von retarderinterner Flüssigkeitsreibung bzw. elektrischer Wirbelstrombildung erzeugen. Hierbei gibt ein Vorwählglied, beispielsweise in Form eines Bedienhebels, die fahrerseitig angeforderte Bremsleistung vor, wobei ausgehend von einer Nullposition der Bremswiderstand mit wachsender oder mehrfacher Auslenkung des Bedienhebels ansteigend ist. In Verbindung mit einer elektronischen Steuereinheit lässt sich der Retarder entsprechend ansteuern.

Ungeachtet dessen kann es, wie bereits oben erwähnt, in bestimmten Betriebszuständen des Kraftfahrzeugs sinnvoll und von Vorteil sein, das Fahrzeug in den ungebremsten Rollzustand zu versetzen, wodurch Kraftstoff gespart sowie Lärm und Emissionen reduziert werden können.

Ein Antriebsstrang mit den wesentlichen Merkmalen des Oberbegriffes von Anspruch 1 ist aus der Offenlegungsschrift DE 102 21 701 A1 bekannt.

Vor diesem Hintergrund liegt der Erfindung die Aufgabe zugrunde, in weiterer Verbesserung des Standes der Technik an einem Antriebsstrang eines Kraftfahrzeuges mit einer Zusatzbremse, insbesondere mit einem Retarder, eine einfache und kostengünstige Möglichkeit zu schaffen, um einen ungebremsten Rollzustand des Fahrzeugs, auch als Roll- beziehungsweise Segelbetrieb bezeichnet, explizit anzufordern, sowie die Handhabung zur Erzielung dieses Betriebszustandes für den Fahrer einfach und transparent zu gestalten.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die Erfindung betrifft demnach einen Antriebsstrang eines Kraftfahrzeuges, mit einem Antriebsmotor, einem Drehmomentwandler, einer Zusatzbremse, beispielsweise einer Motorbremse, einem Retarder oder einem Hybridmödul, einer manuell zu betätigenden Stellvorrichtung für ein Leistungsstellglied des Antriebsmotors, einem manuell zu betätigenden Vorwählglied für einen Betriebsbereich des Drehmomentwandlers, einem manuell zu betätigenden Vorwählglied zur Auswahl eines definierten Bremswiderstandes der Zusatzbremse, einem manuell zu betätigenden Steller zur Aktivierung einer die Fahrgeschwindigkeit des Kraftfahrzeugs verzögernden Bremse, und einer elektronischen Steuereinheit zur Aufnahme, Verarbeitung und Abgabe von Signalen sowie Daten des Antriebsstranges und/oder des Kraftfahrzeugs.

An dieser Stelle sei darauf hingewiesen, dass der verwendete Begriff "Drehmomentwandler" alle Vorrichtungen umfasst, mit denen das von dem Antriebsmotor bereitgestellte Drehmoment verändert und weitergeleitet werden kann. Dieser Begriff umfasst daher explizit auch Getriebe jeder Bauart.

Bei diesem Antriebsstrang ist nun zur Lösung der gestellten Aufgabe zusätzlich vorgesehen, dass das Vorwählglied der Zusatzbremse mit der elektronischen Steuereinheit steuerungstechnisch derart verbunden ist, dass dasselbe ausgehend von einer Nullposition "0" sowohl in eine Richtung "I" zur Signalisierung der Auswahl eines Bremswiderstandes der Zusatzbremse, als auch in eine andere Richtung "II" zur Signalisierung der Aktivierung eines antriebslosen Roll- bzw. Segelbetriebes des Kraftfahrzeuges im Sinne eines Wegschaltens des Antriebsdrehmomentes des Antriebsmotors manuell betätigbar ist.

Durch diese Maßnahme ist das an sich bekannte Vorwählglied für die Zusatzbremse in vorteilhafter Weise um eine weitere Wählmöglichkeit erweitert, nämlich um die Möglichkeit der Aktivierung eines antriebs losen Roll- beziehungsweise Segelbetriebes des Kraftfahrzeugs im Sinne eines Wegschaltens des Antriebsmomentes des Antriebsmotors und vorzugsweise einem Öffnen einer Kupplung im Antriebsstrang. Dazu wird die Betätigungseinrichtung des Vorwählgliedes zur Aktivierung dieses Roll- respektive Segelbetriebes ausgehend von einer Nullposition andersgerichtet, vorzugsweise entgegengerichtet zur Betätigungsrichtung zur Auswahl des Bremswiderstandes der Zusatzbremse ausgelenkt.

Dabei sind die jeweiligen Betätigungsrichtungen des Vorwählgliedes für den Fahrer logisch nachvollziehbar, da die Aktivierung des Roll- bzw. Segelbetriebs auch ein Wegschalten eines Bremsmomentes des Antriebsmotors bedeuten kann, welches dem Zuschalten von Bremsmoment mittels der Zusatzbremse logisch entgegensteht.

In besonders vorteilhafter Weise sind die beiden in Rede stehenden Betätigungen in einem einzigen bereits vorhandenen Vorwählglied integriert, wodurch ein zusätzliches Betätigungselement für die Aktivierung des antriebslosen Roll- bzw. Segelbetriebes und in der Folge kostensteigernde Aufwendungen vermieden werden.

Gemäß einer besonders vorteilhaften Ausgestaltung der Erfindung ist das Vorwählglied der Zusatzbremse und des Roll- bzw. Segelbetriebes als ein zumindest aus der Position zur Aktivierung des Roll- bzw. Segelbetriebes im Sinne eines Wegschaltens des Antriebsmomentes des Antriebsmotors selbsttätig in seine Nullposition oder Nichtauslenkstellung zurückschnellendes Vorwählglied ausgebildet. Demnach ist die Aktivierungsposition des Roll- bzw. Segelbetriebes nicht rastend ausgebildet, so dass das Vorwählglied nach Betätigungsende wieder in seine Null- oder Nichtauslenkstellung selbsttätig, beispielsweise mittels Federkraft, zurückschnellt.

Hierdurch sind vorteilhaft die Voraussetzungen dafür geschaffen, dass ein etwaig eingestellter Roll- bzw. Segelbetrieb des Kraftfahrzeugs durch Betätigung der Stellvorrichtung für das Leistungsstellglied des Antriebsmotors, des Vorwählgliedes zur Auswahl eines definierten Bremswiderstandes der Zusatzbremse, des Stellers zur Aktivierung einer die Fahrgeschwindigkeit des Kraftfahrzeugs verzögernden Bremse und/oder in Abhängigkeit von anderen Betriebs- und/oder Fahrbedingungen des Kraftfahrzeugs, wie der aktuellen Fahrgeschwindigkeit, der Temperatur des Antriebsmotors und/oder eines für die Funktion eines Retarders etwaig notwendigen Fluids, dem aktuell eingelegten Gang des Drehmomentwandlers bzw. Getriebes, einem gemessenen oder berechneten Antriebsdrehmoment, aktuell ermittelten Abstands- und/oder Geschwindigkeitswerte anderer Fahrzeuge und/oder dergleichen beendbar ist, ohne nach Beendigung dieses Roll- bzw. Segelbetriebes in einen inkonsistenten Betätigungszustand dieses Vorwählgliedes zu gelangen oder zu verbleiben.

Zudem ist vorgesehen, dass der Roll- bzw. Segelbetrieb des Kraftfahrzeugs durch zumindest eine Freilaufeinrichtung im Antriebsstrang, beispielsweise eine Kupplungseinrichtung, zur Trennung der angetriebenen Fahrzeugräder vom Antriebsmotor, ermöglicht ist.

Schließlich wird vorgeschlagen, dass das Vorwählglied der Zusatzbremse als Bedienhebel nach Art eines Schwenkhebels, Drehhebels oder Zug-/ Druckhebels ausgebildet ist.

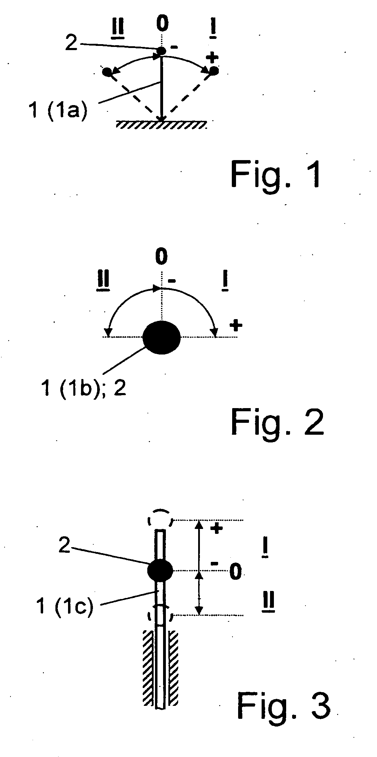

Zur Verdeutlichung der Erfindung ist der Beschreibung eine Zeichnung beigefügt. In den Figuren 1 bis 3 sind schematisch beispielgebend drei mögliche Ausführungsformen des oben beschriebenen Vorwählgliedes der Zusatzbremse abgebildet.

Danach ist gemäß Fig. 1 das Vorwählglied 1 des innerhalb eines an sich bekannten und demgemäß nicht näher gezeigten Antriebsstranges des Kraftfahrzeuges angeordneten und einer ebenfalls hier nicht dargestellten Zusatzbremse als Schwenkhebel 1a mit Knauf 2 ausgebildet. Der Schwenkhebel 1a befindet sich in seiner Ausgangsstellung in einer mit "0" bezeichneten Nullposition bzw. Nichtauslenkstellung, und kann erfindungsgemäß in zwei gesonderte Betätigungsrichtungen "I" und "II" verschwenkt werden.

Wie vorliegend ersichtlich, sind die Betätigungsrichtungen "I" und "II" vorzugsweise exakt entgegengerichtet. Jedoch sind auch andere voneinander abweichende Betätigungsrichtungen "I" und "II" möglich und demgemäß durch die Erfindung mit erfasst (nicht näher dargestellt).

Die Betätigungsrichtung "I" soll gemäß diesem Ausführungsbeispiel die Auswahl eines durch die Zusatzbremse aufzubringenden definierten Bremswiderstandes umfassen, wobei mit größer werdendem Schwenkwinkel des Schwenkhebels 1a ein Ansteigen des Bremswiderstandes zu verzeichnen ist.

Demgegenüber umfasst die Betätigungsrichtung "II" die Aktivierung des Roll- bzw. Segelbetriebes des Kraftfahrzeugs, wobei durch den Doppelpfeil gekennzeichnet sein soll, dass der Schwenkhebel 1a zumindest nach Betätigung bzw. Aktivierung des Roll- bzw. Segelbetriebes selbsttätig in seine Ausgangsposition beziehungsweise Nullposition zurückschnellt.

Der Schwenkhebel 1a ist elektrisch mit einer an sich bekannten und hier nicht dargestellten Steuereinheit verbunden, die entsprechende Steuersignale entweder zur Einstellung des gewählten Bremswiderstandes der Zusatzbremse oder zur Aktivierung des Roll- bzw. Segelbetriebes des Kraftfahrzeuges etwa durch Öffnen beispielsweise einer Kupplung im Antriebsstrang erzeugt.

Ein etwaig eingestellter Roll- bzw. Segelbetrieb des Kraftfahrzeuges wird vorzugsweise durch Betätigung einer Stellvorrichtung für das Leistungsstellglied des Antriebsmotors, des Vorwählgliedes 1 bzw. Schwenkhebels 1a in Richtung zur Auswahl eines definierten Bremswiderstandes der Zusatzbremse, eines Stellers zur Aktivierung einer die Fahrgeschwindigkeit des Kraftfahrzeugs verzögernden Bremse und/oder in Abhängigkeit von anderen Betriebs- und/oder Fahrbedingungen des Kraftfahrzeugs, wie der aktuellen Fahrgeschwindigkeit, der Temperatur des Antriebsmotors und/oder eines für die Funktion eines Retarders etwaige notwendigen Fluids, dem aktuell eingelegten Gang des Drehmomentwandlers bzw. Getriebes, einem gemessenen oder berechneten Antriebsdrehmoment, aktuell ermittelten Abstands- und/oder Geschwindigkeitswerten anderer Fahrzeuge und/oder dergleichen beendet. Das Vorwählglied 1 bzw. der Schwenkhebel 1a der Zusatzbremse befindet sich dazu durch dessen autonome Rückstellung bereits in seiner Nullposition bzw. Nichtauslenkstellung, und steht für eine neuerliche Betätigung zur Verfügung.

Das Ausführungsbeispiel gemäß Fig. 2 unterscheidet sich von dem vorbeschriebenen Ausführungsbeispiel lediglich dadurch, dass statt eines Schwenkhebels 1a ein Drehhebel 1b Verwendung findet. Demgegenüber ist in Fig. 3 ein Zug-/Druckhebel 1c vorgesehen. Auch hier sind die beiden in Rede stehenden Betätigungsfunktionen in einem einzigen im Fahrzeug bereits vorhandenen Vorwählglied 1 vorteilhaft integriert. Die Betätigungsrichtungen "I" und "II" zur Aktivierung der jeweiligen Aggregatereaktionen sind dabei zwar unterschiedlich, die jeweils zugeordneten Fahrzeugbetriebsweisen, wie Segelbetrieb bzw. Zusatzbremsbetrieb, insbesondere Retarder-Bremsbetrieb, sind aber bei allen drei Ausführungsformen identisch.

### Bezugszeichen

- 1: Vorwählglied
- 1a: Schwenkhebel
- 1b: Drehhebel
- 1c: Zug-/Druckhebel
- 2: Knauf

## Patentansprüche

1. Antriebsstrang eines Kraftfahrzeuges, mit einem Antriebsmotor, einem Drehmomentwandler, einer Zusatzbremse, wie beispielsweise einer Motorbremse, einem Retarder oder einem Hybridmodul, einer manuell zu betätigenden Stellvorrichtung für ein Leistungsstellglied des Antriebsmotors, einem manuell zu betätigenden Vorwählglied für einen Betriebsbereich des Drehmomentwandlers, einem manuell zu betätigenden Vorwählglied (1) zur Auswahl eines definierten Bremswiderstandes der Zusatzbremse, einem manuell zu betätigenden Steller zur Aktivierung einer die Fahrgeschwindigkeit des Kraftfahrzeugs verzögernden Bremse, und einer elektronischen Steuereinheit zur Aufnahme, Verarbeitung und Abgabe von Signalen sowie Daten des Antriebsstranges und/oder des Kraftfahrzeuges, **dadurch gekennzeichnet, dass** das Vorwählglied (1) der Zusatzbremse mit der elektronischen Steuereinheit steuerungstechnisch derart verbunden ist, dass dasselbe ausgehend von einer Nullposition "0" sowohl in eine Richtung "I" zur Signalisierung der Auswahl eines Bremswiderstandes der Zusatzbremse, als auch in eine andere Richtung "II" zur Signalisierung der Aktivierung eines antriebslosen Roll- bzw. Segelbetriebes des Kraftfahrzeuges im Sinne eines Wegschaltens des Antriebsdrehmomentes des Antriebsmotors manuell betätigbar ist.

2. Antriebsstrang nach Anspruch 1, **dadurch gekennzeichnet, dass** das Vorwählglied (1) der Zusatzbremse als ein zumindest aus seiner Position zur Aktivierung des Roll- bzw. Segelbetriebes des Kraftfahrzeugs selbsttätig in seine Nullposition zurückschnellendes Vorwählglied (1) ausgebildet ist.

3. Antriebsstrang nach Anspruch 1 oder 2, **dadurch gekennzeichnet, dass** ein etwaige eingestellter Roll- bzw. Segelbetrieb des Kraftfahrzeugs beendbar ist durch Betätigung der Stellvorrichtung für das Leistungsstellglied des Antriebsmotors, des Vorwählgliedes (1) in Richtung zur Auswahl eines definierten Bremswiderstandes der Zusatzbremse, des Stellers zur Aktivierung einer die Fahrgeschwindigkeit des Kraftfahrzeugs verzögernden Bremse und/oder in Abhängigkeit von anderen Betriebs- und/oder Fahrbedingungen des Kraftfahrzeugs, wie der aktuellen Fahrgeschwindigkeit, der Temperatur des Antriebsmotors und/oder eines für die Funktion eines Retarders etwaig notwendigen Fluids, dem aktuell eingelegten Gang des Drehmomentwandlers, einem gemessenen oder berechneten Antriebsdrehmoment, aktuell ermittelten Abstands- und/oder Geschwindigkeitswerte anderer Fahrzeuge und/oder dergleichen.

4. Antriebsstrang nach zumindest einem der Ansprüche 1 bis 3, **dadurch gekennzeichnet, dass** der Roll- bzw. Segelbetrieb des Kraftfahrzeugs durch zumindest eine Freilaufeinrichtung, wie eine Kupplungseinrichtung, zur Trennung der angetriebenen Fahrzeugräder vom Antriebsmotor, ermöglicht ist.

5. Antriebsstrang nach zumindest einem der Ansprüche 1 bis 4, **dadurch gekennzeichnet, dass** das Vorwählglied (1) der Zusatzbremse als Bedienhebel nach Art eines Schwenkhebels (1a), Drehhebels (1b) oder Zug-/Druckhebels (1 c) ausgebildet ist.

## Claims

1. Drive train of a motor vehicle, having a drive engine, a torque converter, an additional brake such as for example an engine brake, a retarder or a hybrid module, an actuator device which can be activated manually, for a power actuating element of the drive engine, a preselector element which can be activated manually, for an operating range of the torque converter, a preselector element (1) which can be activated manually, for selecting a defined braking resistance of the additional brake, an actuator which can be activated manually, for activating a brake which decelerates the velocity of the motor vehicle, and an electronic control unit for recording, processing and outputting signals as well as data of the drive train and/or of the motor vehicle, **characterized in that** the preselector element (1) of the additional brake is connected to the electronic control unit in terms of control technology in such a way that it can be activated manually from a zero position "0" either in a direction "I" for signalling the selection of a braking resistance of the additional brake or in another direction "II" for signalling the activation of a driveless rolling mode or coasting mode of the motor vehicle in the sense of shifting away the drive torque of the drive motor.

2. Drive train according to Claim 1, **characterized in that** the preselector element (1) of the additional brake is embodied as a preselector element (1) which quickly moves back automatically into its zero position at least from its position for activating the rolling mode or coasting mode of the motor vehicle.

3. Drive train according to Claim 1 or 2, **characterized in that** any rolling mode or coasting mode of the motor vehicle which is set can be ended by activating the actuator device for the power actuating element of the drive motor, the preselector element (1) in the direction for selecting a defined braking resistance of the additional brake, the actuator for activating a brake which decelerates the velocity of the motor vehicle and/or as a function of other operating conditions and/or driving conditions of the motor vehicle such as the current velocity, the temperature of the drive engine and/or of any fluid which is necessary for the functioning of a retarder, the currently engaged gearspeed of the torque converter, a measured or calculated drive torque, currently determined distance values and/or speed values of other vehicles and/or the like.

4. Drive train according to at least one of Claims 1 to 3, **characterized in that** the rolling mode or coasting mode of the motor vehicle is made possible by at least one freewheeling device, such as a clutch device, for disconnecting the driven vehicle wheels from the drive motor.

5. Drive train according to at least one of Claims 1 to 4, **characterized in that** the preselector element (1) of the additional brake is embodied as an operator control lever in the manner of a pivoting lever (1a), rotary lever (1b) or push/pull lever (1c).

## Revendications

1. Chaîne cinématique d'un véhicule automobile, comprenant un moteur d'entraînement, un convertisseur de couple, un frein auxiliaire, comme par exemple un frein moteur, un ralentisseur ou un module hybride, un dispositif de réglage à commande manuelle pour un organe de réglage de puissance du moteur d'entraînement, un organe de présélection à commande manuelle pour une plage de fonctionnement du convertisseur de couple, un organe de présélection à commande manuelle (1) pour la sélection d'une résistance de freinage définie du frein auxiliaire, un actionneur à commande manuelle pour activer un frein ralentissant la vitesse de conduite du véhicule automobile, et une unité de commande électronique pour recevoir, traiter et restituer des signaux ainsi que des données de la chaîne cinématique et/ou du véhicule automobile, **caractérisée en ce que** l'organe de présélection (1) du frein auxiliaire est connecté à l'unité de commande électronique par une technique de commande de telle sorte que celui-ci partant d'une position nulle "0", puisse être actionné manuellement à la fois dans une direction "I" pour la signalisation de la sélection d'une résistance de freinage du frein auxiliaire, et dans une autre direction "II" pour la signalisation de l'activation d'un mode roue libre ou "voile" sans entraînement du véhicule automobile au sens d'une déconnexion du couple d'entraînement du moteur d'entraînement.

2. Chaîne cinématique selon la revendication 1, **caractérisée en ce que** l'organe de présélection (1) du frein auxiliaire est réalisé sous forme d'un organe de présélection (1) revenant rapidement automatiquement dans sa position nulle au moins depuis sa position d'activation du mode de roue libre ou de voile du véhicule automobile.

3. Chaîne cinématique selon la revendication 1 ou 2, **caractérisée en ce qu'**un éventuel mode de roue libre ou de voile engagé du véhicule automobile peut être terminé par l'actionnement du dispositif de réglage pour l'organe de réglage de puissance du moteur d'entraînement, de l'organe de présélection (1) dans la direction de la sélection d'une résistance de freinage définie du frein auxiliaire, de l'actionneur pour l'activation d'un frein ralentissant la vitesse de conduite du véhicule automobile, et/ou en fonction d'autres conditions de fonctionnement et/ou de conduite du véhicule automobile, comme la vitesse de conduite actuelle, la température du moteur d'entraînement et/ou d'un fluide éventuellement nécessaire pour la fonction d'un ralentisseur, du rapport actuellement enclenché du convertisseur de couple, d'un couple d'entraînement mesuré ou calculé, des valeurs de distance et/ou de vitesse actuellement déterminées d'autres véhicules, et/ou similaires.

4. Chaîne cinématique selon au moins l'une quelconque des revendications 1 à 3, **caractérisée en ce que** le mode de roue libre ou de voile du véhicule automobile est mis en oeuvre par au moins un dispositif de roue libre, comme un dispositif d'embrayage, pour la séparation des roues motrices du véhicule du moteur d'entraînement.

5. Chaîne cinématique selon au moins l'une quelconque des revendications 1 à 4, **caractérisée en ce que** l'organe de présélection (1) du frein auxiliaire est réalisé sous forme de levier de commande à la manière d'un levier pivotant (1a), d'un levier rotatif (1b) ou d'un levier à pression/tirage (1c) .
